# EUROPÄISCHE PATENTSCHRIFT

(11) **EP 0 445 332 B1**
(45) Veröffentlichungstag und Bekanntmachung des Hinweises auf die Patenterteilung: **08.06.1994**
(21) Anmeldenummer: 90104394.3
(22) Anmeldetag: 08.03.1990
(51) Int. Cl.: G08B 17/00

(54) **Vorrichtung zur Überwachung explosionsgefährdeter Anlagen**
Device for monitoring potentially explosive installations
Dispositif pour surveiller des installations explosives

(43) Veröffentlichungstag der Anmeldung: 11.09.1991
(73) Patentinhaber: IRS Industrie Rationalisierungs Systeme GmbH, D-64347 Griesheim (DE)
(72) Erfinder: Brennecke, Hermann, D-6100 Darmstadt 13 (DE); Liere, Horst, D-6116 Eppertshausen (DE)
(74) Vertreter: Brommer, Hans Joachim, Dr.-Ing.

(56) Entgegenhaltungen:
- WO-A-86/00450
- DE-U- 8 416 132
- US-A- 4 459 484
- REVIEW OF SCIENTIFIC INSTRUMENTS Band 50, Nr. 11, November 1979, Seiten 1441-1444; I. LIEBMAN et al.: "Sensor-trigger device for explosion barrier"

## Beschreibung

Die Erfindung betrifft eine Vorrichtung zur Überwachung explosionsgefährdeter Anlagen mittels zumindest eines Helligkeitsensors und eines Drucksensors, die bei Überschreiten vorgegebener Helligkeits- bzw. Druckwerte bestimmt Explosionsschutzmaßnahmen, insbesondere Abschotten des Explosionsherdes und Zufuhr von Löschmittel auslösen, wobei beide Sensoren in einem gemeinsamen Gehäuse kombiniert sind und der Drucksensor dem zu überwachenden Raum zugewandt ist.

Bei Explosionsschutzanlagen ist es bekannt, den Druckverlauf in den explosionsgefährdeten Anlagebereichen zu überwachen und bei Überschreiten vorgegebener Schwellenwerte eine Explosions-Unterdrückung durch Löschmittelzufuhr, Flammensperren, Abschotten und dergleichen auszulösen.

Um die Auslösesicherheit zu erhöhen, ist es auch bekannt, zusätzlich zu dem Drucksensor einen Helligkeitssensor in den zu überwachenden Anlagebereich einzubauen, so daß beim Auftreten von Feuerschein - unabhängig von einer eventuell noch ankommenden Druckwelle - Schutzmaßnahmen ausgelöst werden.

Allerdings wird bei einer derartigen kombinierten Überwachung der Installationsaufwand sehr hoch, weil die doppelte Anzahl von Sensoren eingebaut werden muß. Hinzu kommt, daß explosionsgefährdete Anlagen meist dickwandig aus hochfestem Stahl hergestellt sind, so daß das Anbringen von Montagebohrungen aufwändig ist, ebenso der anschließende druckdichte Einbau der Sensoren. Häufig sind Wanddurchbrüche auch aus festigkeitstechnischen Gründen unerwünscht.

Hiervon ausgehend liegt die Aufgabe der vorliegenden Erfindung darin, eine Vorrichtung zur kombinierten Helligkeits- und Drucküberwachung der Eingangs beschriebenen Art dahingehend zu verbessern, daß ihr Montageaufwand drastisch reduziert wird.

Diese Aufgabe wird erfindungsgemäß dadurch gelöst, daß der Helligkeitssensor hinter dem Drucksensor angeordnet ist, wobei der Drucksensor als zumindest infrarotdurchlässiges Plättchen ausgebildet ist.

Der Erfindung liegt die überraschende Erkenntnis zugrunde, daß die druckempfindlichen Plättchen der Drucksensoren bei genügend dünner Wandstärke so durchscheinend, zumindest aber so infrartodurchlässig sind, daß man dahinter noch einen Helligkeitssensor positionieren kann. Als Drucksensor kann dabei sogar auf an sich bekannte Keramikplättchen zurückgegriffen werden, die bei einer Wandstärke von etwa 1/2 mm ausreichend durchscheinend sind.

Die Erfindung bietet somit den Vorteil, daß mit einem einzigen Einbauelement zwei Explosionskriterien gleichzeitig überwacht werden können. Die Montage wie auch die Verlegung der entsprechenden Steuerleitungen wird gegenüber herkömmlichen kombinierten Überwachungssystemen halbiert.

Schließlich besteht ein wesentlicher Vorteil der Erfindung darin, daß der Helligkeitssensor durch den davor angeordneten Drucksensor von den häufig aggressiven Medien abgeschirmt wird, die in der zu überwachenden Anlage zirkulieren. Dazu braucht lediglich der Drucksensor dicht in das Sensorgehäuse eingebaut zu werden.

Dabei ist es durch Review of Scientific Documents 50(1979) Nov. No 11, S.1441-1443 bereits bekannt, einen Helligkeits- und einen Drucksensor in einem gemeinsamen Gehäuse zu kombinieren. Dort ist die Kombination jedoch nur elektrischer Natur, derart, daß der Druckschalter zur Spannungsversorgung der Infrarotsensoren dient.

Ansich kann der Helligkeitssensor direkt auf der Rückseite des Drucksensors befestigt, etwa angeklebt werden. Damit es jedoch zu keiner Beeinträchtigung in den Verformungseigenschaften des Drucksensors kommt,empfiehlt es sich, den Helligkeitssensor mit Abstand hinter den Drucksensor anzuordnen und ihn etwa am Sensorgehäuse zu befestigen.

Der Helligkeitssensor kann in ansich bekannter Weise als Fotozelle oder Pindiode ausgebildet sein. Sein Platzbedarf ist dann so gering, daß er in die herkömmlichen Gehäuse der Drucksensoren hineinpaßt.

Zweckmäßig ist der Helligkeitssensor ebenso wie der Drucksensor an eine gemeinsame Auswerteelektronik angeschlossen, die direkt im Sensorgehäuse untergebracht ist. Bei dieser Auswerteelektronik handelt es sich üblicherweise um einen Mikroprozessor, der gegebenenfalls von außen auf die gewünschten Grenzwerte für die Helligkeit bzw. den Druck eingestellt werden kann.

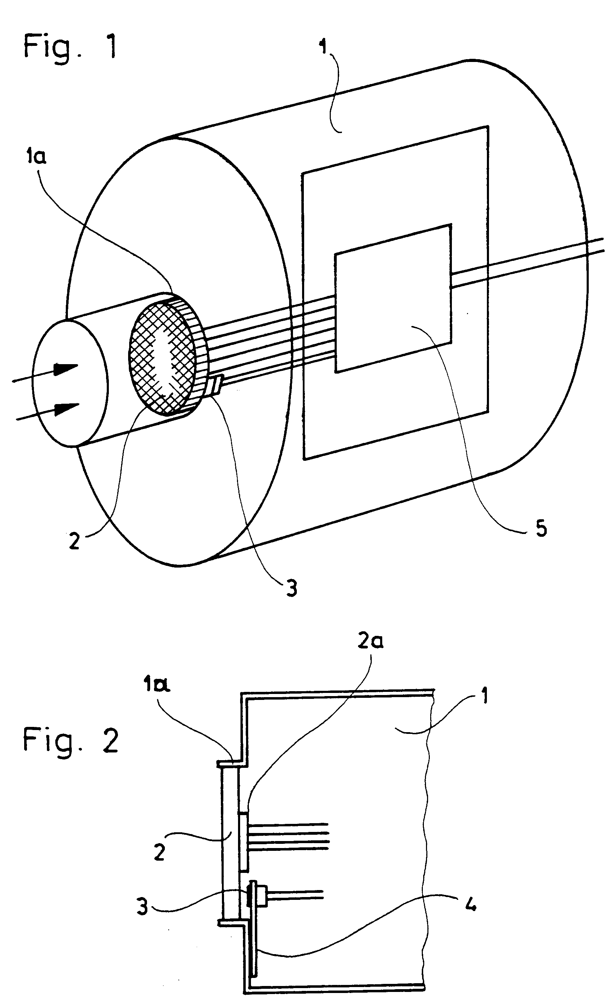

Weitere Merkmale und Vorteile der Erfindung ergeben sich aus der nachfolgenden Beschreibung einer Zeichnung; dabei zeigt
- Figur 1:: ein Schrägbild des kombinierten Sensors in schematischer Darstellung und
- Figur 2:: einen teilweisen Axialschnitt
Das gemeinsame Gehäuse für die beiden Sensoren ist mit 1 bezeichnet. Es ist zylindrisch und weist an seinem vorderen Ende einen koaxial vorstehenden Bund 1 a auf, der den Drucksensor 2 in Form einer runden Keramikscheibe umfaßt. Die Keramikscheibe 2 ist druckdicht in dem Bund 1a fixiert.

An der Außenseite des vorstehenden Bundes 1 a kann ein Schraubgewinde angeordnet sein, um das Gehäuse 1 in eine entsprechende Bohrung der zu überwachenden Anlage einzuschrauben.

Auf der Rückseite der Keramikplatte 2 ist eine Wheatstone-Brücke 2 a zur Messung der bei Druckeinwirkung auftretenden Verformungen angebracht. Außerdem befindet sich hinter der Keramikplatte 2 jedoch gegenüber der Wheatstone-Brücke 2 a radial versetzt der Helligkeitssensor 3. Er ist über eine Lasche 4 am Gehäuse 1 befestigt.

Außerdem befindet sich in dem Gehäuse 1 ein Mikroprozessor 5, der die von den beiden Sensoren 2 und 3 kommenden Signale verarbeitet und bei Überschreiten der ihm eingegebenen Grenzwerte die entsprechenden Auslösesignale abgibt. Die Ausbildung eines derartigen Mikroprozessors ist ansich bekannt, weshalb hier nicht weiter darauf eingegangen wird.

Es liegt selbstverständlich im Rahmen der Erfindung, den Drucksensor 2 anders im Gehäuse zu montieren. Entscheidend ist lediglich, daß der Drucksensor so durchscheinend ist, daß zumindest Infrarotstrahlung durch ihn hindurchtreten kann und vom Lichtsensor 3 empfangen wird.

## Patentansprüche

1. Vorrichtung zur Überwachung explosionsgefährdeter Anlagen mittels zumindest eines Helligkeitssensors (3) und eines Drucksensors (2), die bei Überschreiten vorgegebener Helligkeits- bzw. Druckwerte bestimmte Explosionsschutzmaßnahmen, insbesondere Abschotten des Explosionsherdes und Zufuhr von Löschmittel auslösen, wobei beide Sensoren (2, 3) in einem gemeinsamen Gehäuse (1) kombiniert sind und der Drucksensor (2) dem zu überwachenden Raum zugewandt ist,
dadurch gekennzeichnet,
daß der Helligkeitssensor (3) hinter dem Drucksensor (2) angeordnet ist, wobei der Drucksensor (2) als zumindest infrarotdurchlässiges Plättchen ausgebildet ist.

2. Vorrichtung nach Anspruch 1,
dadurch gekennzeichnet,
daß der Drucksensor (2) als durchscheinende Keramikplatte ausgebildet ist.

3. Vorrichtung nach Anspruch 1 oder 2,
dadurch gekennzeichnet,
daß der Drucksensor (2) dicht in das Sensorgehäuse (1) eingebaut ist.

4. Vorrichtung nach einem der vorhergehenden Ansprüche,
dadurch gekennzeichnet,
daß der Helligkeitssensor (3) auf der Rückseite des Drucksensors (2) befestigt ist.

5. Vorrichtung nach einem der vorhergehenden Ansprüche,
dadurch gekennzeichnet,
daß der Helligkeitssensor (3) am Sensorgehäuse (1) befestigt ist.

6. Vorrichtung nach einem der vorhergehenden Ansprüche,
dadurch gekennzeichnet,
daß der Helligkeitssensor (3) mit Abstand hinter dem Drucksensor (2) angeordnet ist.

7. Vorrichtung nach einem der vorhergehenden Ansprüche,
dadurch gekennzeichnet,
daß der Helligkeitssensor (3) als Fotozelle oder Pindiode ausgebildet ist.

8. Vorrichtung nach einem der vorhergehenden Ansprüche,
dadurch gekennzeichnet,
daß beide Sensoren (2, 3) an eine gemeinsame Auswerteelektronik (5) im Sensorgehäuse (1) angeschlossen sind.

9. Vorrichtung nach Anspruch 7,
dadurch gekennzeichnet,
daß die Auswerteelektronik (5) ein Mikroprozessor ist.

## Claims

1. Apparatus for monitoring plants subject to the danger of explosions by means of at least one brightness sensor (3) and a pressure sensor (2) which, on exceeding predetermined brightness and pressure values, respectively, trigger defined explosion protection measures, particularly compartmentalisation of the centre of the explosion and the supply of extinguishing agent, wherein both sensors (2,3) are combined into a common housing (1) and the pressure sensor (2) faces the space to be monitored, characterised in that the brightness sensor (3) is arranged behind the pressure sensor (2) and the pressure sensor (2) is formed as a platelet permeable at least to infra-red radiation.

2. Apparatus according to claim 1, characterised in that the pressure sensor 2 is formed as a translucent ceramic plate.

3. Apparatus according to claim 1 or 2, characterised in that the pressure sensor 2 is sealedly mounted in the sensor housing 1.

4. Apparatus according to any preceding claim, characterised in that the brightness sensor 3 is secured to the rear side of the pressure sensor 2.

5. Apparatus according to any preceding claim, characterised in that the brightness sensor is secured to the rear side of the sensor housing 1.

6. Apparatus according to any preceding claim, characterised in that the brightness sensor 3 is arranged at a distance behind the pressure sensor 2.

7. Apparatus according to any preceding claim, characterised in that the brightness sensor 3 formed as a photocell or p-i-n diode.

8. Apparatus according to any preceding claim, characterised in that both sensors 2,3 are connected to common electronic analysis circuitry 5 in the sensor housing 1.

9. Apparatus according to claim 8, characterised in that electronic analysis circuitry 5 is a microprocessor.

## Revendications

1. Dispositif pour la surveillance d'installations sujettes au risque d'explosion, comprenant au moins un capteur de clarté (3) et un capteur de pression (2) qui, en réponse au franchissement de valeurs de clarté et de pression prédéterminées, déclenchent certaines mesures de protection contre l'explosion, en particulier l'isolement du foyer de l'explosion par de cloisons étanches et l'acheminement d'agents d'extinction, les deux capteurs (2, 3) étant combinés dans un boîtier commun (1) et le capteur de pression (2) étant dirigé vers l'espace à surveiller,
caractérisé
en ce que le capteur de clarté (3) est disposé derrière le capteur de pression (2), le capteur de pression (2) étant constitué par une plaquette transparente au moins aux infrarouges.

2. Dispositif selon la revendication 1,
caractérisé
en ce que le capteur de pression (2) est constitué par une plaque céramique translucide.

3. Dispositif selon la revendication 1 ou 2,
caractérisé
en ce que le capteur de pression (3) est monté à joint étanche dans le boîtier (1) du capteur.

4. Dispositif selon une des revendications précédentes,
caractérisé
en ce que le capteur de clarté (3) est fixé sur la face arrière du capteur de pression (2).

5. Dispositif selon une des revendications précédentes,
caractérisé
en ce que le capteur de clarté (3) est fixé au boîtier (1) du capteur.

6. Dispositif selon une des revendications précédentes,
caractérisé
en ce que le capteur de clarté (3) est disposé à distance en arrière du capteur de pression (2).

7. Dispositif selon une des revendications précédentes,
caractérisé
en ce que le capteur de clarté (3) est constitué par une cellule photo-électrique ou une diode épingle.

8. Dispositif selon une des revendications précédentes,
caractérisé
en ce que les deux capteurs (2, 3) sont raccordés à une électronique d'analyse commune (5) logée dans le boîtier (1) du capteur.

9. Dispositif selon la revendication 7,
caractérisé
en ce que l'électronique d'analyse (5) est un microprocesseur.
